# EUROPEAN PATENT APPLICATION

(11) **EP 2 012 530 A2**
(43) Date of publication of application: **07.01.2009**
(21) Application number: 08159441.8
(22) Date of filing: 01.07.2008
(51) Int. Cl.: H04N 5/335

(54) **Image pickup apparatus and monitoring device and method**

(30) Priority: 04.07.2007 JP 2007175774
(71) Applicant: Omron Corporation, Kyoto-shi, Kyoto 600-8530 (JP)
(72) Inventor: Ishii, Hirotaka, c/o Omron Corp., 801, Minamifudodo-cho, Kyoto-shi, Kyoto 600-8530 (JP)
(74) Representative: Wilhelms · Kilian & Partner Patentanwälte

(57) **Abstract**

Detection and notification of states where degradation of the image quality occurs due to heat are certainly performed. A temperature detection portion detects the temperature around a logarithmic transformation type image pickup device and supplies a signal indicative of the detected temperature to a notification portion. A permissible-temperature setting portion sets a permissible temperature which is a temperature around the logarithmic transformation type image pickup device which allows keeping the degree of degradation of the image quality within a range permitted by an image processing device, on the basis of the illuminance of an object which was detected by an object illuminance detection portion and, then, supplies information indicative of the set permissible temperature to the notification portion. The notification portion outputs an error signal to the image processing device, if the temperature around the logarithmic transformation type image pickup device has exceeded the permissible temperature. The present invention is applicable to an image pickup apparatus having a logarithmic transformation type image pickup device.

## Description

### BACKGROUND OF THE INVENTION

### 1. Field of the Invention

The present invention relates to an image pickup apparatus, and a monitoring device and method and, more particularly, relates to an image pickup apparatus, and a monitoring device and method which are capable of certainly performing detection and notification of states where the image quality is degraded by heat.

### 2. Description of the related art

In recent years, there has been actively development of vehicle-mounted devices which perform image processing on images taken through image pickup by an image pickup apparatus mounted on a vehicle and realize improvement in convenience, safeness and crime prevention utilizing the results of image processing, such as drive assist devices for assisting driving, anti-theft devices for preventing thefts in vehicles, and safety assist devices for assisting safe running of vehicles.

Further, there have been expectations for utilization, in these vehicle-mounted devices, image pickup apparatuses employing logarithmic transformation type image pickup devices capable of outputting image data constituted by luminance values substantially proportional to the logarithms of incident light quantities (refer to, for example, Japanese Unexamined Patent Publication No. 7-506932) for realizing a wide dynamic range for taking clear images, through image pickup, outdoors with backgrounds in bright skies, in environments with backlights such as west sun or in the nighttime.

### SUMMARY OF THE INVENTION

However, similarly to image pickup apparatuses employing conventional CCD (Charge Coupled Device) image pickup devices and CMOS (Complementary Metal Oxide Semiconductor) image pickup devices, image pickup apparatuses employing a logarithmic transformation type image pickup device have induced the problem of degradation of the image quality due to the occurrence of heat-induced noises such as dark currents and heat noises, when the ambient temperature rises. Further, along with the degradation of the image quality, the reliability of the result of image processing is degraded, thus resulting in the possibility of false operations of the above-described vehicle-mounted devices.

The present invention has been made in view of the above circumstances and aims at enabling certainly performing detection and notification of states where degradation of the image quality occurs due to heat.

An image pickup apparatus according to a first aspect of the present invention is an image pickup apparatus having an image pickup device which outputs a luminance value substantially proportional to the logarithm of incident light quantity, and includes a temperature detection unit for detecting the temperature around the image pickup device, a permissible-temperature setting unit for setting a permissible temperature which is a temperature around the image pickup device which can cause the degree of degradation of the image quality to fall within a permissible range, on the basis of the illuminance of an object, and a notification unit for outputting a signal indicative of the fact that the temperature around the image pickup device has exceeded the permissible temperature if the temperature around the image pickup device has exceeded the permissible temperature.

With the image pickup apparatus according to the first aspect of the present invention, the temperature around the image pickup device is detected, and a permissible temperature which is a temperature around the image pickup device which can cause the degree of degradation of the image quality to fall within a permissible range is set on the basis of the illuminance of the object and, if the temperature around the image pickup device has exceeded the permissible temperature, a signal indicative of the fact that the temperature around the image pickup device has exceeded the permissible temperature is outputted.

Accordingly, it is possible to certainly perform detection and notification of states where degradation of the image quality occurs due to heat.

The image pickup apparatus is constituted by an image pickup apparatus capable of taking, through image pickup, an image of an object with a dynamic range wider than that of human eyes, utilizing a logarithmic transformation type image pickup device, such as HDRC (High Dynamic Range CMOS (Complementary Metal Oxide Semiconductor) (trademark)).

The temperature detection unit is constituted by, for example, a temperature sensor, such as a thermocouple or a thermistor.

The permissible-temperature setting unit and the signal outputting unit are constituted by, for example, a CPU (Central Processing Unit).

The image pickup apparatus can further include an illumination control unit for adjusting the luminance of an illumination device such that the luminance of illumination directed to the object is increased, if the temperature around the image pickup device has exceeded the permissible temperature.

Accordingly, it is possible to suppress the degradation of the image quality due to heat.

The illumination control unit is constituted by, for example, a CPU.

The temperature detection unit can be adapted to be capable of detecting the temperature around the image pickup device, by intercepting light incident on the light receiving surfaces of partial pixels in the image pickup device and detecting the dark current flowing through the partial pixels.

Accordingly, it is possible to detect the temperature around the image pickup device, accurately. Further, it is possible to reduce the space in which the temperature detection unit is installed.

A monitoring device according to a second aspect of the present invention is a monitoring device which monitors the state of an image pickup apparatus having an image pickup device which outputs a luminance value substantially proportional to the logarithm of incident light quantity and includes a permissible-temperature setting unit for setting a permissible temperature which is a temperature around the image pickup device which can cause the degree of degradation of the image quality to fall within a permissible range on the basis of the illuminance of an object, and a notification unit for outputting a signal indicative of the fact that the temperature around the image pickup device has exceeded the permissible temperature if the temperature around the image pickup device has exceeded the permissible temperature.

With the monitoring device according to the second aspect of the present invention, a permissible temperature which is a temperature around the image pickup device which can cause the degree of degradation of the image quality to fall within a permissible range is set on the basis of the illuminance of an object and, if the temperature around the image pickup device has exceeded the permissible temperature, a signal indicative of the fact that the temperature around the image pickup device has exceeded the permissible temperature is outputted.

Accordingly, it is possible to certainly perform detection and notification of states where degradation of the image quality occurs due to heat.

The image pickup apparatus is constituted by an image pickup apparatus capable of taking, through image pickup, an image of an object with a dynamic range wider than that of human eyes, utilizing a logarithmic transformation type image pickup device, such as HDRC (High Dynamic Range CMOS (Complementary Metal Oxide Semiconductor) (trademark)).

The permissible-temperature setting unit and the signal outputting unit are constituted by, for example, a CPU (Central Processing Unit).

The monitoring device can further include an illumination control unit for adjusting the luminance of an illumination device such that the luminance of illumination directed to the object is increased, if the temperature around the image pickup device has exceeded the permissible temperature.

Accordingly, it is possible to suppress the degradation of the image quality due to heat.

The illumination control unit is constituted by, for example, a CPU.

The monitoring device can further include an illuminance detection unit for detecting the illuminance of the object.

The illuminance detection unit is constituted by, for example, a light meter or an illumination sensor.

A monitoring method according to the second aspect of the present invention is a monitoring method for monitoring the state of an image pickup apparatus having an image pickup device which outputs a luminance value substantially proportional to the logarithm of incident light quantity and includes a permissible-temperature setting step for setting a permissible temperature which is a temperature around the image pickup device which can cause the degree of degradation of the image quality to fall within a permissible range on the basis of the illuminance of an object, and a notification step for, if the temperature around the image pickup device has exceeded the permissible temperature, outputting a signal indicative of the fact that the temperature around the image pickup device has exceeded the permissible temperature.

With the monitoring method according to the second aspect of the present invention, a permissible temperature which is a temperature around the image pickup device which can cause the degree of degradation of the image quality to fall within a permissible range is set on the basis of the illuminance of an object and, if the temperature around the image pickup device has exceeded the permissible temperature, a signal indicative of the fact that the temperature around the image pickup device has exceeded the permissible temperature is outputted.

Accordingly, it is possible to certainly perform detection and notification of states where degradation of the image quality occurs due to heat.

The image pickup apparatus is constituted by an image pickup apparatus capable of taking, through image pickup, an image of an object with a dynamic range wider than that of human eyes, utilizing a logarithmic transformation type image pickup device such as HDRC (High Dynamic Range CMOS (Complementary Metal Oxide Semiconductor) (trademark)).

The permissible-temperature setting step is constituted by, for example, a permissible-temperature setting step for setting, through a CPU, a permissible temperature which is a temperature around the image pickup device which can cause the degree of degradation of the image quality to fall within a permissible range on the basis of the illuminance of the object, and the notification step is constituted by, for example, an outputting step for outputting, through the CPU, a signal indicative of the fact that the temperature around the image pickup device has exceeded the permissible temperature if the temperature around the image pickup device has exceeded the permissible temperature.

As described above, according to the first and second aspects of the present invention, a permissible temperature which is a temperature around the image pickup device which can cause the degree of degradation of the image quality to fall within a permissible range is set. Particularly, according to the first and second aspects of the present invention, it is possible to certainly perform detection and notification of states where degradation of the image quality occurs due to heat.

### BRIEF DESCRIPTION OF THE DRAWINGS

Fig. 1 is a block diagram illustrating a first embodiment of an image processing system to which the present invention is applied;
Fig. 2 is a view for describing an example of the structure of a temperature detection portion in Fig. 1;
Fig. 3 is a view for describing another example of the structure of a temperature detection portion in Fig. 1;
Fig. 4 is a graph illustrating sensitivity characteristics of a logarithmic transformation type image pickup device and other devices;
Fig. 5 is a flow chart for describing image processing which is executed in the image processing system of Fig. 1;
Fig. 6 is a block diagram illustrating a second embodiment of an image processing system to which the present invention is applied;
Fig. 7 is a flow chart for describing image processing which is executed in the image processing system of Fig. 6; and
Fig. 8 is a block diagram illustrating an example of the structure of a personal computer.

### DETAILED DESCRIPTION OF THE PREFERRED EMBODIMENTS

Hereinafter, embodiments of the present invention will be described, with reference to the drawings.

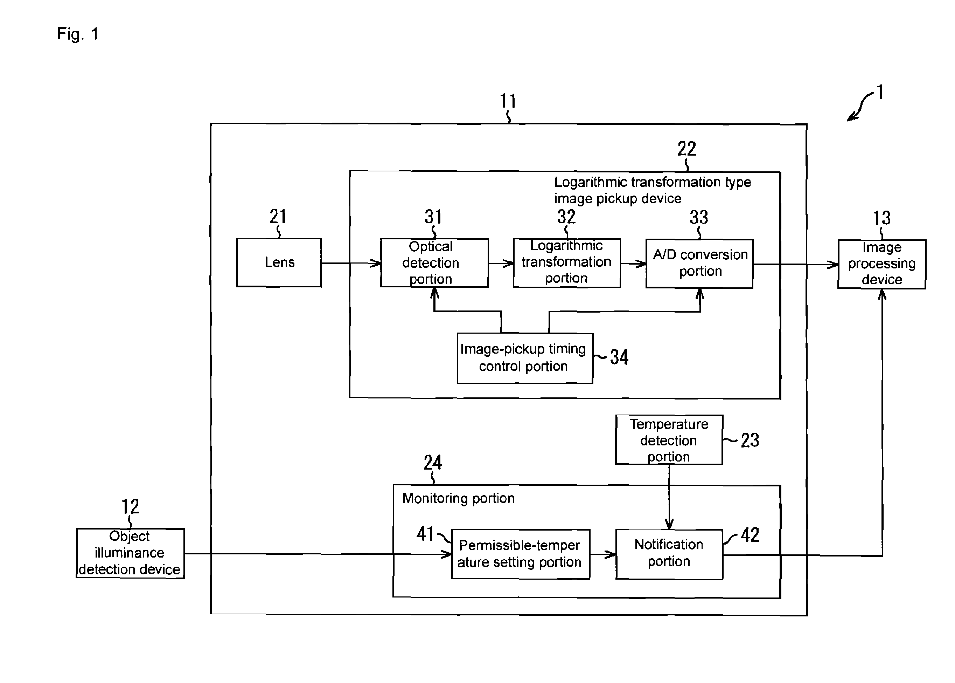

Fig. 1 is a block diagram illustrating a first embodiment of an image processing system to which the present invention is applied. The image processing system 1 is structured to include an image pickup apparatus 11, an object illuminance detection device 12, and an image processing device 13. Further, the image pickup apparatus 11 is structured to include a lens 21, a logarithmic transformation type image pickup device 22, a temperature detection portion 23 and a monitoring portion 24. Further, the logarithmic transformation type image pickup device 22 is formed to be an image pickup device of a logarithmic transformation type, such as HDRC (High Dynamic Range CMOS (Complementary Metal Oxide Semiconductor) (trademark)), and is structured to include an optical detection portion 31, a logarithmic transformation portion 32, an A/D (Analog/Digital) conversion portion 33 and an image-pickup timing control portion 34. Further, the monitoring portion 24 is structured to include a permissible-temperature setting portion 41 and a notification portion 42.

Light emitted from an object (or light reflected by the object) to be subjected to image pickup by the image pickup apparatus 11 enters the lens 21 and then forms an image on the light receiving surface, not illustrated, in the optical detection portion 31 in the logarithmic transformation type image pickup device 22.

The optical detection portion 31 is constituted by, for example, a light receiving device which is constituted by a plurality of photodiodes. The optical detection portion 31 converts the light from the object which has been caused to form an image by the lens 21 into electrical charges corresponding to the brightness (illuminance) of the incident light and accumulates the electric charges resulted from the conversion. The optical detection portion 31 supplies the accumulated electrical charges to the logarithmic transformation portion 32, in synchronization with control signals supplied from the image-pickup timing control portion 34.

The logarithmic transformation portion 32 is constituted by, for example, a plurality of MOSFETs (Metal Oxide Semiconductor Field Effect Transistors). The logarithmic transformation portion 32 converts the electric charges supplied from the optical detection portion 31 into a voltage value substantially proportional to the logarithm of the number of electric charges (the intensity of electric current), namely the logarithm of the quantity of light from the object, for each pixel, to create analog electrical signals, utilizing the subthreshold characteristic of the MOSEFTSλ. The logarithmic transformation portion 32 supplies the created analog electrical signals to the A/D conversion portion 33.

The A/D conversion portion 33 converts the analog electrical signals into digital image data (which may be simply referred to as images, hereinafter), through A/D conversion, in synchronization with control signals supplied from the image-pickup timing control portion 34. For example, in cases of conversion into 14-bits binary digital image data with no codes, the luminance value (or the pixel value) of the image data ranges from 0, which corresponds to the highest darkness, to 2¹⁴-1, which corresponds to the highest brightness. The A/D conversion portion 33 supplies the digital image resulted from the conversion to the image processing device 13.

As described above, the image pickup apparatus 11 outputs digital image data constituted by luminance values (or pixel values) proportional to the logarithms of the brightnesses of the light from the object which has entered the optical detection portion 31, namely the incident light quantities. Further, such an image pickup device of a logarithmic transformation type is disclosed in detail in, for example, Japanese Unexamined Patent Publication No. 7-506932.

Also, the optical detection portion 31 in the logarithmic transformation type image pickup device 22 can directly supply the electric charges resulted from the conversion to the logarithmic transformation portion 32, without accumulating them.

The temperature detection portion 23 detects the temperature around the logarithmic transformation type image pickup device 22 and supplies a signal indicative of the detected temperature to the notification portion 42.

The monitoring portion 24 monitors the state of the image pickup apparatus 11 and, if a state where the degree of degradation of the image quality due to heat exceeds a permissible range has occurred, provides a notification of the occurrence of this state to the image processing device 13 in the subsequent stage.

The permissible-temperature setting portion 14 acquires, from the object illuminance detection device 12, a signal indicative of the illuminance of the object to be subjected to image pickup by the image pickup apparatus 11. The permissible-temperature setting portion 41 sets a permissible temperature which is a temperature around the logarithmic transformation type image pickup device 22 which can cause the degree of degradation of the image quality to fall within a permissible range on the basis of the illuminance of an object. The permissible-temperature setting portion 41 supplies information indicative of the set permissible temperature to the notification portion 42.

If the temperature detected by the temperature detection portion 23 exceeds the permissible temperature, the notification portion 42 outputs, to the image processing device 13, an error signal indicating of the fact that the temperature around the logarithmic transformation type image pickup device 22 has exceeded the permissible temperature.

The object illuminance detection device 12 is constituted by, for example, an illumination meter or an illumination sensor and detects the illuminance of the object to be subjected to image pickup by the image pickup apparatus 11.

The image processing device 13 applies predetermined image processing to images taken through image pickup by the image pickup apparatus 11. For example, the image processing device 13 performs image processing, such as image recognition and image transformation. The result of the image processing by the image processing device 13 is utilized in a vehicle-mounted device which realizes improvement in convenience, safeness, crime prevention and the like.

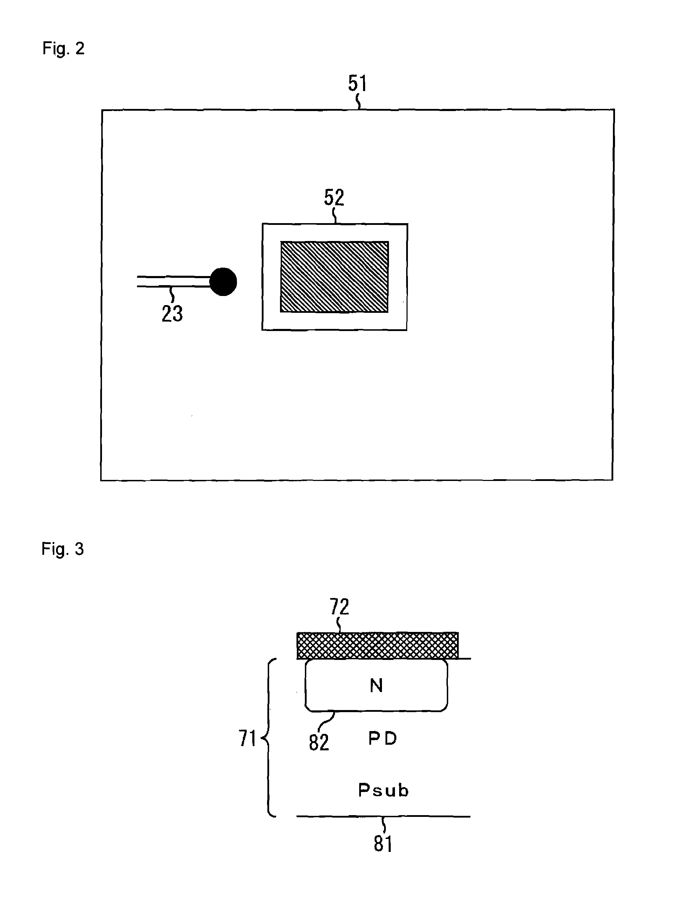

Next, with reference to Fig. 2 and Fig. 3, an exemplary structure of the temperature detection portion 23 will be described.

First, the temperature detection portion 23 can be constituted by a temperature sensor such as a thermocouple or a thermistor. For example, as illustrated in Fig. 2, the temperature detection portion 23 constituted by a temperature sensor is provided near the light receiving surface 52 of the optical detection portion 31 which is provided on a substrate 51, which enables detecting the temperature around the logarithmic transformation type image pickup device 22. Also, alternately, the temperature detection portion 23 can be installed, for example, around the image pickup apparatus 11, on the surface of the casing of the image pickup apparatus 11 or within the casing of the image pickup apparatus 11. Further, in this case, in order to enable detection of the temperature around the logarithmic transformation type image pickup device 22 more accurately, it is desirable to install the temperature detection portion 23 at a closest possible position to the logarithmic transformation type image pickup device 22.

Also, it is possible to constitute the temperature detection portion 23 by a temperature detection circuit provided on the semiconductor on which the logarithmic transformation type image pickup device 22. Such a temperature detection circuit is disclosed in detail in, for example, JP-A No. 5-45233, JP-A No. 2004-150897 and the like. In this case, it is possible to detect the temperature around the logarithmic transformation type image pickup device 22, more accurately, at a position closer thereto, than in cases of constituting the temperature detection portion 23 by a temperature sensor.

Also, the temperature detection portion 23 can be structured to intercept the light incident on the light receiving surfaces of partial pixels of the light detection portion 31 in the logarithmic transformation type image pickup device 22 and detect the dark current which flows through the partial pixels. For example, as illustrated in Fig. 3, in the case where the light receiving device constituting the optical detection portion 22 in the logarithmic transformation type image pickup device 22 is constituted by a photodiode (PD) 71 constituted by a P-type semiconductor substrate 81 and an N-type semiconductor 82, a light interception layer 72 for intercepting light incident on the photodiode 71 is provided on the upper surface of the N-type semiconductor 82. For example, the light interception layer 72 is constituted by a color filter or by a circuit pattern made of a metal such as aluminum.

In the photodiode 71, electrical charges induced by heat, namely dark currents, are caused, in addition to electrical charges induced by photoelectric conversion due to incident light. Since the light interception layer 72 is provided, the amount of electric charges induced by the photoelectrical conversion in the photodiode 71 is substantially zero, and the pixel signals outputted from the circuits constituting the pixels which are shielded from light by the light interception layer 72 have values substantially reflecting the magnitude of the dark current flowing through the photodiode 71. The magnitude of the dark current is increased with increasing temperature around the photodiode 71, within a predetermined temperature range, and also is substantially proportional to the temperature around the photodiode 71. Accordingly, it is possible to detect, substantially accurately, the temperature around the photodiode 71 which is shielded from light, namely the temperature around the logarithmic transformation type image pickup device 22, by detecting the values of pixel signals corresponding to the pixels shielded from light. Further, in this case, it is possible to detect the temperature around the logarithmic transformation type image pickup device 22, more accurately, at a position closer thereto, than in cases of constituting the temperature detection portion 23 by a temperature sensor.

In this case, for example, the logarithmic transformation type image pickup device 22 can be provided with a number of pixels greater than the number of pixels required for image pickup and, further, the light interception layer 72 can be provided on the light receiving surfaces of the additionally-provided pixels, which can realize the temperature detection portion 23.

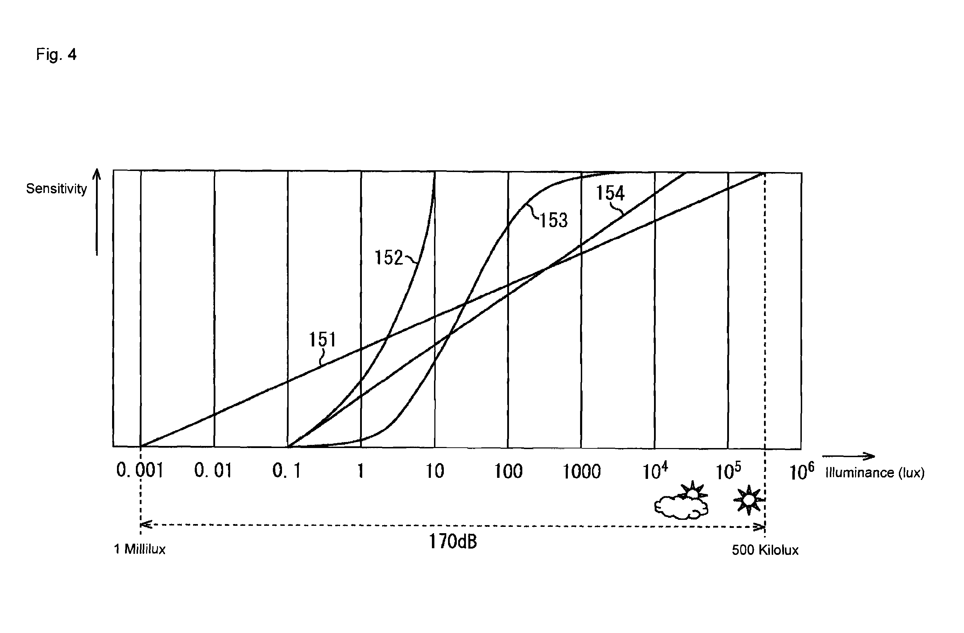

Fig. 4 is a graph illustrating sensitivity characteristics of a logarithmic transformation type image pickup device 22, a CCD image pickup device, a silver film, and human eyes. In Fig. 3, the horizontal axis represents the logarithmic value of the illuminance of incident light (the unit is lux), while the vertical axis represents the sensitivity to the illuminance of incident light. The line 151 represents the sensitivity characteristic of the logarithmic transformation type image pickup device 22, the line 152 represents the sensitivity characteristic of the CCD image pickup device, the line 153 represents the sensitivity characteristic of the silver film, and the line 154 represents the sensitivity characteristic of human eyes.

The logarithmic transformation type image pickup device 22 outputs image data constituted by luminance values (or pixel values) substantially proportional to the logarithms of the incident light quantities, as described above. Therefore, even if the incident light quantity is increased, it is possible to prevent the capacities of the devices such as the photodiodes or the MOSFETs constituting the logarithmic transformation type image pickup device 22 from being saturated, and it is possible to prevent the electric currents flowing through the respective devices and the voltages applied to the respective devices from exceeding ranges which enable outputting according to the inputs to the respective devices. Accordingly, within the luminance range within which image pickup is possible, it is possible to provide luminance values (or pixel values) corresponding to the change in the incident light quantity, substantially accurately. That is, it is possible to take, through image pickup, images constituted by luminance values (or pixel values) reflecting the intensities of the quantities of light incident from objects substantially accurately, within a dynamic range wider than those of the CCD image pickup device, the silver film and human eyes, such as an about 170 dB dynamic range from about 1 millilux to about 500 kilolux which is higher than the luminance of sun light. However, the dynamic range of the logarithmic transformation type image pickup device 22 used in the image pickup apparatus 11 is not limited to 170 dB described above, and it is possible to employ a dynamic range corresponding to the required dynamic range, such as about 100 dB or 200 dB, according to the application.

Accordingly, the image pickup apparatus 11 employing the logarithmic transformation type image pickup device 22 induces no luminance clipping within the human-visible luminance range, which eliminates the necessity of adjusting the incident light quantity through adjustments of the throttling and the shutter speed. That is, the image pickup apparatus 11 can pick up, faithfully, the detail luminance distribution in the object, even without adjusting the incident light quantity.

For example, in cases of taking, through image pickup, an image of an area ahead of a vehicle from the inside of the vehicle in the daytime, even if the sun enters the angle of view, the image pickup apparatus 11 can take, through image pickup, an image which faithfully replicates the distribution of the luminance of the sun and the road ahead, without adjusting the incident light quantity. Further, in cases of taking, through image pickup, an image of an area ahead of a vehicle from the inside of the vehicle in the nighttime, even if an oncoming vehicle directs its headlights thereto from a position ahead, the image pickup apparatus 11 can take, through image pickup, an image which replicates, faithfully, the luminance distribution ranging from the light of the headlights of the oncoming vehicle to areas which are not illuminated by the headlights of the own vehicle, without adjusting the incident light quantity.

Further, in the case of the CCD image pickup device and the silver film, their sensitivity characteristics are not proportional to the logarithm of the illuminance of the incident light due to the gamma characteristics and the like as represented by the line 152 and the line 153, while in the case of the logarithmic transformation type image pickup device 22, the sensitivity characteristic is substantially proportional to the logarithm of the illuminance of the incident light.

As described above, the image pickup apparatus 11 employing the logarithmic transformation type image pickup device 22 is not influenced by the occurrence of luminance clipping, adjustments of the incident light quantity and gamma characteristics. Accordingly, the luminance values (or the pixel values) of image data created, through image pickup, by the image pickup apparatus 11 are varied such that they reflect the change of the luminance of the object and the movement of the object, substantially faithfully. That is, the difference values, for each pixel, of difference data indicative of the differences in image data among frames are values which replicate the change of the luminance of the object and the movement of the object, substantially faithfully.

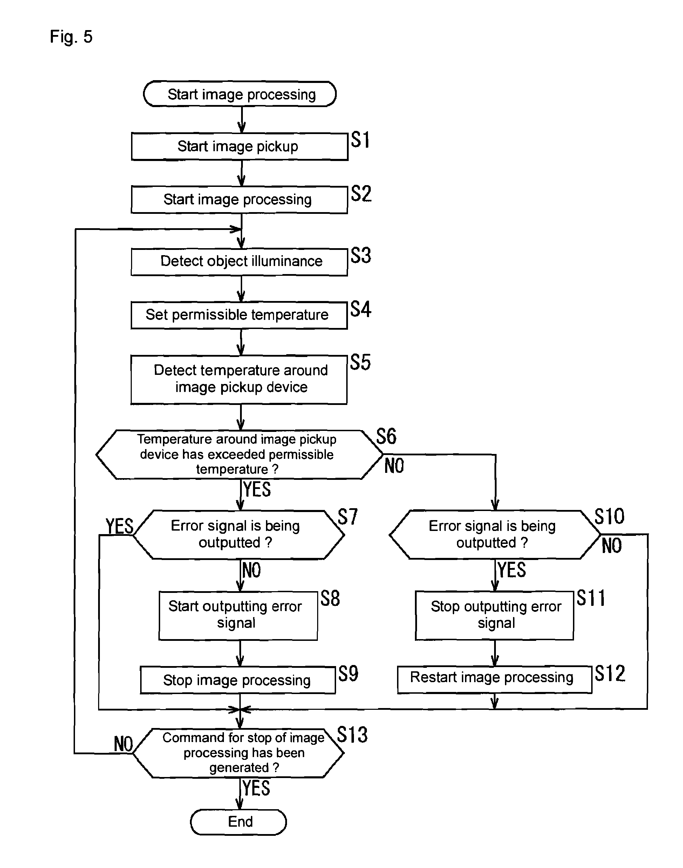

Next, with reference to a flow chart in Fig. 5, there will be described image processing which is executed by the image processing system 1 in Fig. 1. Further, this processing is started, for example, if a user operates an operation portion, not illustrated, in the image processing system 1, to input, thereto, a command for start of image processing.

In step S1, the image pickup apparatus 11 starts image pickup. The image pickup apparatus 11 starts outputting an image taken through image pickup to the image processing device 13.

In step S2, the image processing device 13 starts image processing on the image taken through image pickup by the image pickup apparatus 11.

In step S3, the object illuminance detection device 12 detects the illuminance of the object. The object illuminance detection device 12 supplies a signal indicative of the detected illuminance of the object to the permissible-temperature setting portion 41.

In step S4, the permissible-temperature setting portion 41 sets a permissible temperature.

The influence of heat-induced noises such as dark currents and thermal noises on the image quality is relatively decreased with increasing illuminance of incident light, namely with increasing luminance value (or pixel value), and is relatively increased with decreasing illuminance of incident light, namely with decreasing luminance value (or pixel value). That is, even in states where the temperature around the logarithmic transformation type image pickup device 22 is the same, the influence of heat-induced noises on the image quality is changed with the illuminance of the incident light. Further, since there is no need for adjusting the incident light quantity in the image pickup apparatus 11 employing the logarithmic transformation type image pickup device 22, as described above, there is substantially one-to-one correspondence between the illuminance of the object and the incident light quantity. Further, within a predetermined temperature range, the magnitudes of heat-induced noises are substantially proportional to the temperature around the logarithmic transformation type image pickup device 22.

Accordingly, the degree of degradation of the image quality of images taken through image pickup by the image pickup apparatus 11 due to heat-induced noises is changed with the illuminance of the object and the temperature around the logarithmic transformation type image pickup device 22 and, therefore, can be estimated substantially accurately by detecting the illuminance of the object and the temperature around the logarithmic transformation type image pickup device 22.

The permissible-temperature setting portion 41 preliminarily has information indicative of the relationship between the object illuminance and the permissible temperature which is a temperature around the logarithmic transformation type image pickup device 22 which enables satisfying the image quality required by the image processing device 13, namely a temperature around the logarithmic transformation type image pickup device 22 which can cause the degree of degradation of the image quality to fall within a range permitted by the image processing device 13.

The relationship between the permissible temperature and the object illuminance can be preliminarily determined, for example, by conducting, at predetermined object-illuminance intervals, experiments which cause the image processing device 13 to perform image processing on images taken through image pickup by the image pickup apparatus 11 and detect the reliability of the results of the image processing, while changing the temperature around the logarithmic transformation type image pickup device 22 at a state where the object illuminance is fixed. That is, the maximum temperature within the range of temperature around the logarithmic transformation type image pickup device 22 within which the reliability of the result of image processing is higher than a predetermined value, at a predetermined object illuminance, is set as a permissible temperature for the object illuminance.

The permissible-temperature setting portion 41 sets the permissible temperature corresponding to the object illuminance detected by the object illuminance detection device 12 as a permissible temperature for the current state and, then, supplies information indicative of the set permissible temperature to the notification portion 42.

In step S5, the temperature detection portion 23 detects the temperature around the image pickup device. More specifically, the temperature detection portion 23 detects the temperature around the logarithmic transformation type image pickup device 22 and supplies a signal indicative of the detected temperature to the notification portion 42.

In step S6, the notification portion 42 determines whether or not the temperature around the image pickup device has exceeded the permissible temperature. If the notification portion 42 determines that the temperature around the logarithmic transformation type image pickup device 22 detected by the temperature detection portion 23 has exceeded the permissible temperature set by the permissible-temperature setting portion 41, the processing proceeds to step S7.

In step S7, the notification portion 42 determines whether or not an error signal is being outputted. If it is determined that no error signal is being outputted, namely if the transition from a state where the temperature around the logarithmic transformation type image pickup device 22 was lower than the permissible temperature to a state where it has exceeded the permissible temperature has occurred, the processing proceeds to step S8.

In step S8, the notification portion 42 starts outputting an error signal to the image processing device 13.

In step S9, the image processing device 13 stops image processing, along with the start of inputting of the error signal thereto. Thereafter, the processing proceeds to step S13.

If it is determined in step S7 that no error signal is being outputted, namely if the state where the temperature around the logarithmic transformation type image pickup device 22 has exceeded the permissible temperature has been continued, the processes in steps S8 and S9 are skipped, and the processing proceeds to step S13.

If it is determined in step S6 that the temperature around the logarithmic transformation type image pickup device 22 detected by the temperature detection portion 23 is equal to or lower than the permissible temperature which was set by the permissible-temperature setting portion 41, the processing proceeds to step S10.

In step S10, the notification portion 42 determines whether or not an error signal is being outputted. If it is determined that an error signal is being outputted, namely if the transition from a state where the temperature around the logarithmic transformation type image pickup device 22 had exceeded the permissible temperature to the state where it is lower than the permissible temperature has occurred, the processing proceeds to step S11.

In step S11, the notification portion 42 stops outputting the error signal to the image processing device 13.

In step S12, the image processing device 13 restarts image processing, along with the stop of inputting of the error signal thereto. Thereafter, the processing proceeds to step S13.

If it is determined in step S10 that no error signal is being outputted, namely if the state where the temperature around the logarithmic transformation type image pickup device 22 is lower than the permissible temperature has been continued, the processing in steps S11 and S12 are skipped, and the processing proceeds to step S13.

In step S13, the image processing system 1 determines whether or not a command for stopping the image processing has been generated. If it is determined that no command for stopping the image processing has been generated, the processing is returned to step S3 and, until it is determined in step S13 that a command for stopping the image processing has been generated, the processes in steps S3 to S13 are repeatedly executed.

If the user has inputted a command for stopping the image processing by operating the operation portion, not illustrated, in the image processing system 1, in step S13, the image processing system 1 determines that the image processing should be stopped and ends the image processing.

As described above, when the temperature around the logarithmic transformation type image pickup device 22 has risen to cause a state where the degree of degradation of the image quality due to heat exceeds the range permitted by the image processing device 13, an error signal is certainly outputted to the image processing device 13, thereby preventing the image processing device 13 from performing image processing on degraded images to cause false operations.

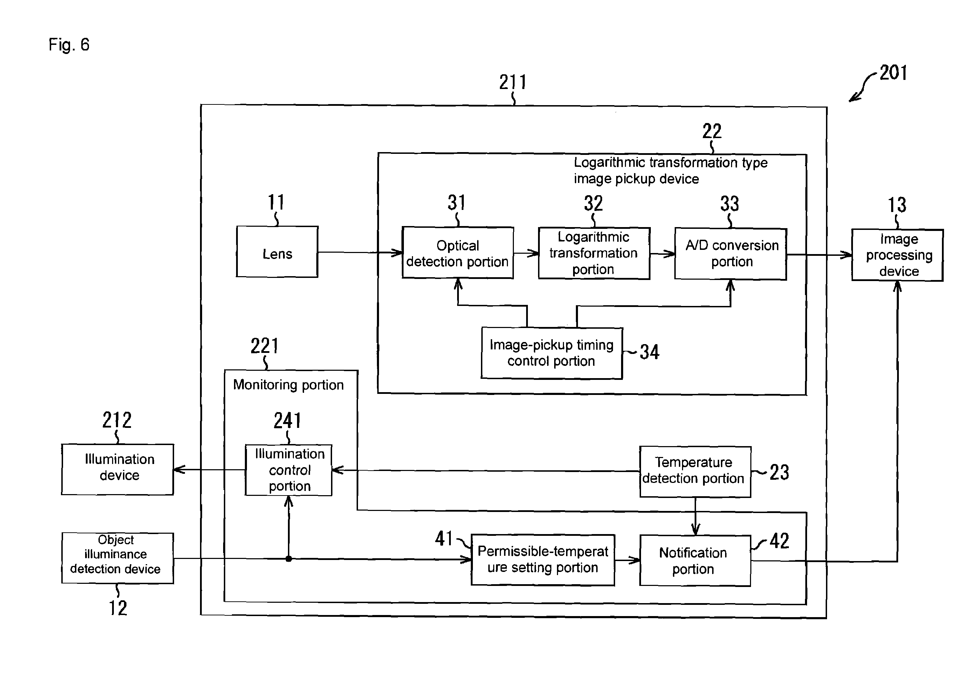

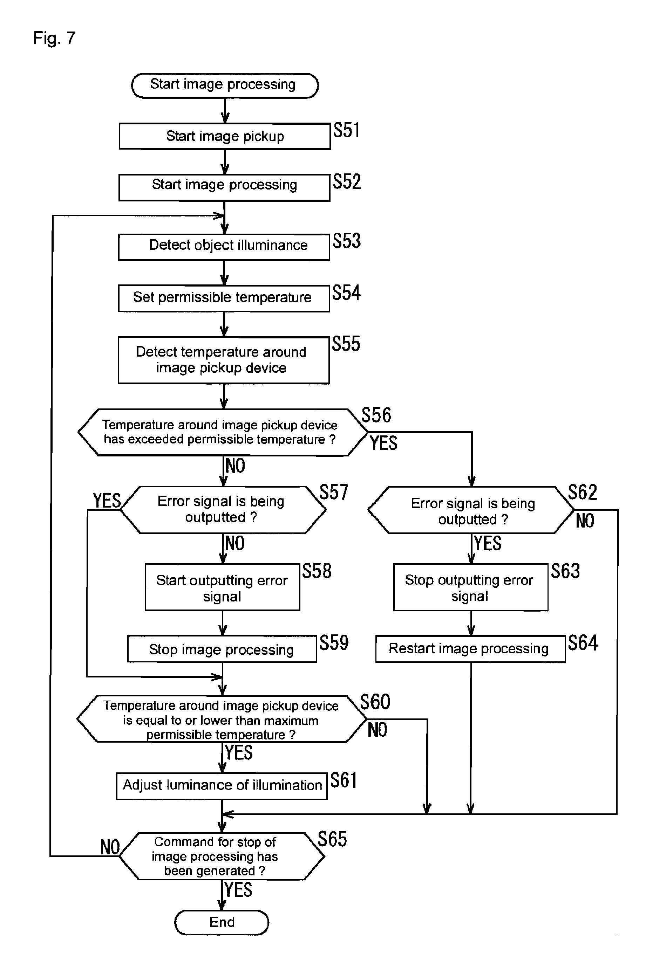

Next, with reference to Fig. 6 and Fig. 7, a second embodiment of the present invention will be described.

Fig. 6 is a block diagram illustrating the second embodiment of the image processing system to which the present invention is applied. Further, in the figure, the portions corresponding to those in Fig. 6 are designated by the same reference characters, and the portions which perform the same processing will not be described since the description thereof would be redundant.

The image processing system 201 is structured to include an image pickup apparatus 211, an illumination device 212, an object illuminance detection device 12, and an image processing device 13. Further, the image pickup apparatus 211 is structured to include a lens 21, a logarithmic transformation type image pickup device 22, a temperature detection portion 23 and a monitoring portion 221. Further, the logarithmic transformation type image pickup device 22 is structured to include an optical detection portion 31, a logarithmic transformation portion 32, an A/D conversion portion 33 and an image-pickup timing control portion 34. Further, the monitoring portion 221 is structured to include a permissible-temperature setting portion 41, a notification portion 42 and an illumination control portion 241.

The illumination control portion 241 acquires a signal indicative of the illuminance of an object from the object illuminance detection device 12. Further, the illumination control portion 241 acquires, from the temperature detection portion 23, a signal indicative of the temperature around the logarithmic transformation type image pickup device 22. The illumination control portion 241 adjusts the luminance of the illumination by the illumination device 212, on the basis of the temperature around the logarithmic transformation type image pickup device 22, to adjust the illuminance of the object to be subjected to image pickup by the image pickup apparatus 211.

The illumination device 212 is installed to illuminate the object to be subjected to image pickup by the image pickup apparatus 211 and directs illumination light to the object.

Next, with reference to the flow chart of Fig. 7, there will be described image processing which is executed by the image processing system 201 in Fig. 6. Further, this processing is started, for example, if a user operates an operation portion, not illustrated, in the image processing system 201 to input a command for start of image processing.

In step S51, image pickup is started, similarly to the processing in step S1 in Fig. 5 described above. In step S52, image processing is started, similarly to the processing in step S2 in Fig. 5 described above.

In step S53, similarly to the processing in step S3 in Fig. 5 described above, the illuminance of the object is detected, and a signal indicative of the detected illuminance of the object is supplied from the object illuminance detection device 12 to the permissible-temperature setting portion 41 and the illumination control portion 241.

In step S54, similarly to the processing in step S4 in Fig. 5 described above, a permissible temperature is set, and information indicative of the set permissible temperature is supplied from the permissible-temperature setting portion 41 to the notification portion 42.

In step S55, similarly to the processing in step S5 in Fig. 5 described above, the temperature around the logarithmic transformation type image pickup device 22 is detected, and a signal indicative of the detected temperature is supplied to the notification portion 42 and the illumination control portion 241.

In step S56, it is determined whether or not the temperature around the image pickup device has exceeded the permissible temperature, similarly to the processing in step S6 in Fig. 5 described above. If it is determined that the temperature around the image pickup device has exceeded the permissible temperature, the processing proceeds to step S57.

The processing in steps S57 to S59 are the same as the processing in steps S7 to S9 in Fig. 5 described above and will not be described since the description thereof would be redundant.

In step S60, the illumination control portion 241 determines whether or not the temperature around the image pickup device is equal to lower than a maximum permissible temperature. If the illumination control portion 241 determines that the temperature around the logarithmic transformation type image pickup device 22 which was detected by the temperature detection portion 23 is equal to or lower than a predetermined maximum permissible temperature, the processing proceeds to step S61.

Further, in this case, the maximum permissible temperature is the maximum value of the temperature around the logarithmic transformation type image pickup device 22 which allows keeping the degree of degradation of the quality of images taken through image pickup by the image pickup apparatus 211 within a permissible range by increasing the luminance of the illumination by the illumination device 212 for increasing the object illuminance. That is, when the temperature around the logarithmic transformation type image pickup device 22 has exceeded the maximum permissible temperature, even if the luminance of the illumination by the illumination device 212 is adjusted to a maximum, it is difficult to keep the degree of degradation of the quality of images taken through image pickup by the image pickup apparatus 211 within the permissible range.

In step S61, the illumination control portion 241 adjusts the luminance of the illumination. More specifically, the illumination control portion 241 preliminarily has information indicative of the relationship between the permissible temperature and the object illuminance, similarly to the permissible-temperature setting portion 41. On the basis of the information, the illumination control portion 241 determines an object illuminance which allows keeping the degree of degradation of the quality of images taken through image pickup by the image pickup apparatus 211 within the range permitted by the image processing device 13, at the current temperature around the logarithmic transformation type image pickup device 22, and increases the luminance of the illumination by the illumination device 212 to attain the determined object illuminance. Then, the processing proceeds to step S65.

If it is determined in step S56 that the temperature around the image pickup device has not exceeded the permissible temperature, the processing proceeds to step S62.

The processing in steps S62 to S64 are the same as the processing in steps S10 to S12 in Fig. 5 described above and will not be described since the description thereof would be redundant.

In step S65, the image processing system 201 determines whether or not a command for stopping the image processing has been generated. If it is determined that no command for stopping the image processing has been generated, the processing is returned to step S53 and, until it is determined in step S65 that a command for stopping the image processing has been generated, the processing in steps S53 to S65 are repeatedly executed.

If the user has inputted a command for stopping the image processing by operating the operation portion, not illustrated, in the image processing system 201, in step S65, for example, the image processing system 201 determines that the image processing should be stopped and ends the image processing.

As described above, when the temperature around the logarithmic transformation type image pickup device 22 has risen to cause a state where the degree of degradation of the image quality due to heat exceeds the range permitted by an image processing device 13, an error signal is certainly outputted to the image processing device 13, thereby preventing the image processing device 13 from performing image processing on degraded images to cause false operations. Further, the luminance of the illumination by the illumination device 212 can be adjusted according to the temperature around the logarithmic transformation type image pickup device 22, which can suppress the degradation of the image quality due to heat.

Further, while, in the above description, there has been exemplified a case where the monitoring portion 24 or the monitoring portion 221 is provided within the image pickup apparatus 11 or the image pickup apparatus 211, the monitoring portion 24 or the monitoring portion 221 can be a device separated from the image pickup apparatus 11 or the image pickup apparatus 211. Also, the object illuminance detection device 12 can be provided within the monitoring portion 24 or the monitoring portion 221.

Further, in step S61 in Fig. 7, the luminance of the illumination by the illumination device 212 can be decreased, along with the decrease of the temperature around the logarithmic transformation type image pickup device 22.

The above-described series of processing can be either executed by hardware or executed by software. In the case where the series of processing is executed by software, programs constituting the software can be installed from a program recording medium on a computer incorporated in dedicated hardware or on a general-purpose personal computer, for example, which is capable of executing various types of functions when various types of programs are installed thereon, or the like.

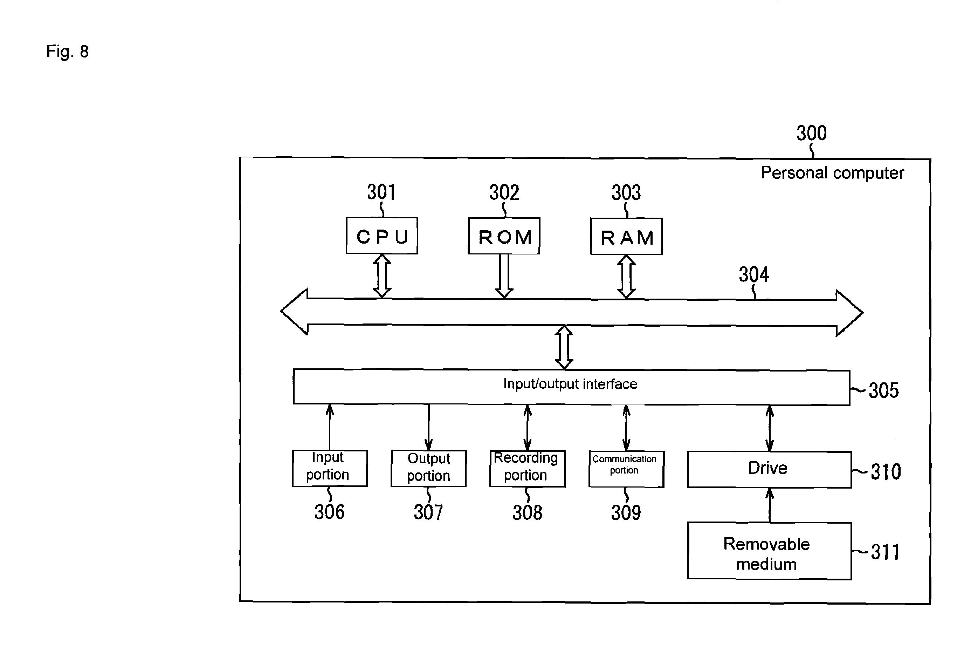

Fig. 8 is a block diagram illustrating an exemplary structure of a personal computer 300 which executes the above-described series of processing, according to programs. A CPU (Central Processing Unit) 301 executes various types of processing, according to programs stored in a ROM (Read Only Memory) 302 or a recording portion 308. A RAM (Random Access Memory) 303 stores data and programs to be executed by the CPU 301, as required. The CPU 301, the ROM 302 and the RAM 303 are interconnected through a bus 304.

Further, an input/output interface 305 is connected to the CPU 301 through the bus 304. An input portion 306 constituted by a keyboard, a mouse, a microphone and the like, and an output portion 307 constituted by a display, a speaker and the like are connected to the input/output interface 305. The CPU 301 executes various types of processing, in response to commands input through the input portion 306. Further, the CPU 301 outputs the results of processing to the output portion 307.

The recording portion 308 connected to the input/output interface 305 is constituted by, for example, a hard disk and stores various types of data and programs to be executed by the CPU 301. A communication portion 309 communicates with external apparatuses through a network, such as the Internet or a local area network.

Also, programs can be acquired through the communication portion 309 and can be recorded in the recording portion 308.

When a removable medium 311, such as a magnetic disk, an optical disk, a magneto-optic disk or a semiconductor memory is mounted, a drive 310 which is connected to the input/output interface 305 drives them and acquires programs and data stored therein. The acquired programs and data are transferred to the recording portion 308 and stored therein, as required.

The program recording medium which stores programs to be installed in a computer and to be made executable by the computer is constituted by the removable media 311 which is a packaged medium constituted by a magnetic disk (including a flexible disc), an optical disc (including a CD-ROM (Compact Disc-Read Only Memory) and a DVD (Digital Versatile Disc)), a magneto-optic disc or a semiconductor memory, the ROM 302 which temporarily or permanently stores programs, or the hard disk constituting the recording portion 308, as illustrated in Fig. 8. Storing programs in the program recording medium is attained utilizing wired or wireless communication mediums such as a local area network, the Internet, digital satellite broadcasting, through the communication portion 309 which is an interface such as a router or a modem, as required.

Further, in the present specification, steps which describe the programs stored in the program recording medium include processes which are executed chronologically in the described order, as a matter of cause, and also include processes which are executed in parallel or individually and are not necessarily executed chronologically.

Further, in the present specification, the system represents the entire apparatus constituted by the plurality of devices.

Further, the embodiments of the present invention are not limited to the above-described embodiments, and various types of changes can be made within ranges which do not depart from the spirits of the present invention.

## Claims

1. An image pickup apparatus having an image pickup device which outputs a luminance value substantially proportional to the logarithm of incident light quantity, comprising:
a temperature detection unit for detecting the temperature around the image pickup device;
a permissible-temperature setting unit for setting a permissible temperature which is a temperature around the image pickup device which can cause the degree of degradation of the image quality to fall within a permissible range, on the basis of the illuminance of an object; and
a notification unit for outputting a signal indicative of the fact that the temperature around the image pickup device has exceeded the permissible temperature if the temperature around the image pickup device has exceeded the permissible temperature.

2. The image pickup apparatus according to Claim 1, further comprising an illumination control unit for adjusting the luminance of an illumination device such that the luminance of illumination directed to the object is increased, if the temperature around the image pickup device has exceeded the permissible temperature.

3. The image pickup apparatus according to Claim 1, wherein the temperature detection unit detects the temperature around the image pickup device, by intercepting light incident on the light receiving surfaces of partial pixels in the image pickup device and detecting the dark current flowing through the partial pixels.

4. A monitoring device which monitors the state of an image pickup apparatus having an image pickup device which outputs a luminance value substantial proportional to the logarithm of incident light quantity, comprising:
a permissible-temperature setting unit for setting a permissible temperature which is a temperature around the image pickup device which causes the degree of degradation of the image quality to fall within a permissible range, on the basis of the illuminance of an object; and
a notification unit for outputting a signal indicative the fact that the temperature around the image pickup device has exceeded the permissible temperature if the temperature around the image pickup device has exceeded the permissible temperature.

5. The monitoring device according to Claim 4, further comprising an illumination control unit for adjusting the luminance of an illumination device such that the luminance of rumination directed to the object is increased, if the temperature around the image pickup device has exceeded the permissible temperature.

6. The monitoring device according to Claim 4, further comprising an illuminance detection unit for detecting the illuminance of the object.

7. A monitoring method for monitoring the state of an image pickup apparatus having an image pickup device which outputs a luminance value substantially proportional to the logarithm of the incident light quantity, comprising:
a permissible-temperature setting step for setting a permissible temperature which is a temperature around the image pickup device which causes the degree of degradation of the image quality to fall within a permissible range, on the basis of the illuminance of an object; and
a notification step for outputting a signal indicative of the fact that the temperature around the image pickup device has exceeded the permissible temperature if the temperature around the image pickup device has exceeded the permissible temperature.
